# EUROPEAN PATENT APPLICATION

(11) **EP 2 854 125 A1**
(43) Date of publication of application: **01.04.2015**
(21) Application number: 13186399.5
(22) Date of filing: 27.09.2013
(51) Int. Cl.: G09G 5/14, G06F 3/0481, G09G 3/34

(54) **Display device adapted for energy conservation**

(71) Applicant: Siemens Aktiengesellschaft, 80333 München (DE)
(72) Inventor: Jayaramaiah, Shilpa, 560085 Bangalore (IN)

(57) **Abstract**

A display device (100) adapted for energy conservation is disclosed. The display device (100) includes a display unit (102) and a processing unit (104). The display unit (100) comprises a matrix of light-emitting elements. The processing unit (104) is configured for executing a runtime application. The runtime application includes at least one graphical user-interface. The graphical user-interface includes a plurality of graphical objects (OB_1... OB_N). The display device (100) is configured for rendering the graphical user-interface to the display unit (102). The display device (100) is such that at least one of the graphical objects (OB_1... OB_N) is individually configured to be rendered in one of a normal rendering mode and a power-saving rendering mode, and the processing unit (104) is configured for regulating an illumination intensity of at least one light-emitting element corresponding to the graphical object based on an active rendering mode thereof.

## Description

The present invention generally relates to display devices and more particularly, to a display device adapted for energy conservation.

Display devices are ubiquitous in modern day world. Display devices are almost always a part of various kinds of computational devices as means for visual output to a user thereof. Various examples of such computational devices include but are not limited to, personal computers, mobile phones, and so on. One specific example of such display devices is a human-machine interface device as used in various industrial applications.

One of the most widely used display technologies in the field of display devices is based on liquid crystal display panels. As liquid crystal display panels do not emit any light on their own, they are dependent on light generated using a backlight panel. Such backlight panels provide requisite light to the liquid crystal display panel using a set of light-emitting elements such as light-emitting diodes. The liquid crystal display panel, which is sandwiched between additional light modulation layers to form a light modulation panel, modulates the light in a desired manner such that required graphics are displayed on a display panel.

Conventional display devices using backlight inherently require significantly high energy during operation owing to the need to keep the backlight panel constantly switched on.

Various other display technologies based on light emitting diodes, including for example, organic light emitting diodes based displays, active-matrix organic light emitting diodes based displays, and so on, currently available in the state of the art also suffer from this limitation.

In the state-of-the-art, one of the techniques commonly used to conserve energy in display devices is to configure the display device to render a screensaver based on lapse of a time interval of user inactivity. The display device is further configured to reduce brightness to a minimum resulting in power saving. However, this solution is not always desirable because in some cases users may only be interested in monitoring certain parts of a user interface. Once there is no activity on the display screen, the entire screen is not visible to the user because of which there is a possibility that the user is unable to receive some important information displayed on the display screen.

Accordingly, there is a need to address the problem of high energy consumption in state of the art display devices in an efficient and practical manner.

It is therefore an object of the present invention to provide a display device adapted for energy conservation.

The object is achieved by providing a display device to claim 1, and a graphical development environment according to claim 11. Further embodiments of the present invention are addressed in the corresponding dependent claims.

The underlying concept of the present invention is to provide a graphical development environment using which graphical objects are individually configured to be rendered in one of a normal rendering mode and a power-saving rendering mode. When a graphical user-interface including such graphical objects is rendered in a display device, a rendering unit within the display device regulates an illumination intensity of one or more light-emitting elements corresponding to said graphical object based on an active rendering mode thereof.

In a first aspect of the present invention, a display device is provided. The display device comprises a display unit and a processing unit. The display unit comprises a matrix of light-emitting elements. Each light-emitting element illuminates at least one display pixel on the display unit. The processing unit is configured for executing a runtime application. The runtime application comprises at least one graphical user-interface. The graphical user-interface comprises a plurality of graphical objects. The display device is configured for individually assigning a rendering mode to at least one of the graphical objects. The rendering mode is one of a normal rendering mode and a power-saving rendering mode. The display device is further configured for regulating an illumination intensity of at least one light-emitting element corresponding to the graphical object when the power-saving rendering mode is assigned thereto.

In a second aspect of the present invention, a graphical development environment is provided. The graphical development environment comprises a main design section permitting design of a graphical user-interface, a pallet section permitting selection of predefined graphical objects for inserting into the graphical user-interface, and a property view section permitting setting of one or more properties corresponding to the graphical objects. The graphical development environment is such that at least one graphical object is individually configured to be rendered in one of a normal rendering mode and a power-saving rendering mode, and further such that the graphical user-interface is suitable for rendering in a display device according to the first aspect of the present invention as described above.

Accordingly, the present invention provides a display device that is adapted for energy conservation.

The present invention is further described hereinafter with reference to illustrated embodiments shown in the accompanying drawings, in which:
- FIG 1: illustrates a schematic view of a display device in accordance with an embodiment of the present invention,
- FIG 2: illustrates a schematic view of display unit in accordance with an embodiment of the present invention,
- FIG 3: illustrates a first schematic view of a graphical development environment in accordance with an embodiment of the present invention,
- FIG 4: illustrates a second schematic view of a graphical development environment in accordance with an embodiment of the present invention,
- FIG 5: illustrates a graphical user-interface rendered in a power-saving rendering mode in accordance with a first embodiment of the present invention,
- FIG 6: illustrates a graphical user-interface rendered in a power-saving rendering mode in accordance with a second embodiment of the present invention, and
- FIG 7: illustrates a graphical user-interface rendered in a power-saving rendering mode in accordance with a third embodiment of the present invention.

Various embodiments are described with reference to the drawings, wherein like reference numerals are used to refer to like elements throughout; a repeated description of such elements in individual figures is omitted. The description of an element given with regard to a particular figure is valid for all other figures unless noted otherwise. Furthermore, not all elements are shown in each figure. However, absence of an element in a figure does not necessarily imply absence of that element. In fact, in some drawings some elements have been intentionally omitted in order to not obscure the described features.

In the following description, for purpose of explanation, numerous specific details are set forth in order to provide a thorough understanding of one or more embodiments. It may be evident that such embodiments may be practiced without these specific details.

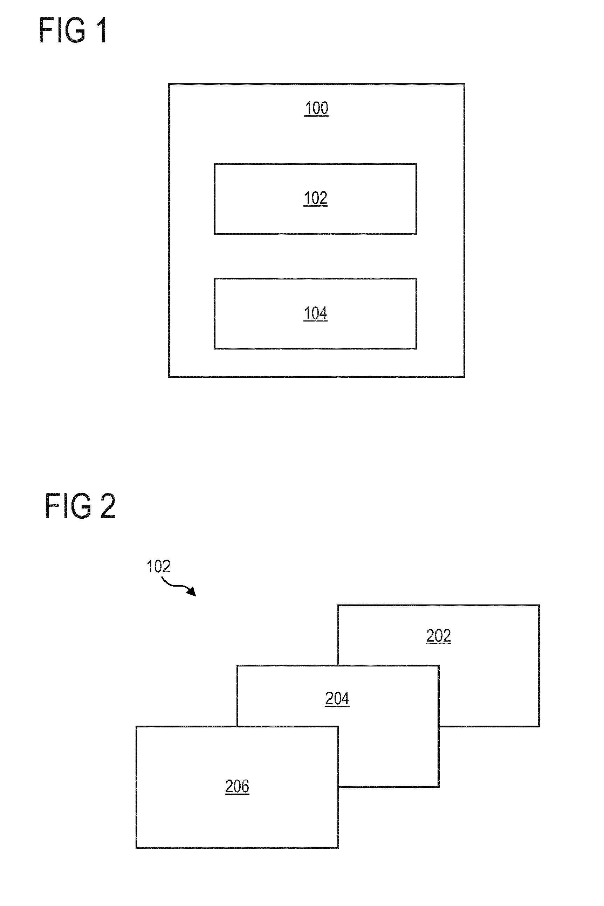

Referring to FIG 1, a schematic view of a display device 100 is illustrated in accordance with an embodiment of the present invention.

The display device 100 includes a display unit 102, and a processing unit 104. The display unit 102 includes a matrix of light-emitting elements. Each individual light-emitting element illuminates at least one display pixel on the display unit 102.

The processing unit 104 is configured for executing a runtime application. The runtime application includes at least one graphical user interface. Each graphical user interface includes a plurality of graphical objects.

Referring now to FIG 2, a display unit 102 is illustrated in accordance with an embodiment of the present invention.

The display unit 102 includes a backlight panel 202, a light modulation panel 204, and a display panel 206.

The backlight panel 202 includes a matrix of light-emitting elements, which are generally light emitting diodes. The light from the backlight panel 202 is routed to the light modulation panel 204. This is generally achieved using light guides or any other suitable modality.

The light modulation panel 204 may be based on any generally known technique. In one example, the light modulation panel 204 is a composite structure with several layers which includes a layer of liquid crystal display sandwiched between light polarization layers. In effect, the light modulation panel 204 is able to modulate the light received from the backlight panel 202 such that suitable graphics may be rendered on the display panel 206.

The present invention is particularly suitable for application in human-machine interface devices, which are exemplary display devices used in a wide variety of applications including, but not limited to, industrial automation systems to display and control process data related to industrial equipment, and hence, act as important aids for the operating personnel.

Toward this end, the human-machine interface device generally has specific hardware, e.g. a touch-screen, and is specifically screened from environmental influences. Specific software is also operated therein. This provides functions, which enhance user-friendliness, quality and safety of operation by an operator. Thus, human-machine interface devices can be used to visualize, control, configure, and generate interactive process maps related to the industrial equipment.

The term human-machine interface device is a generic term covering all components associated with this group of devices, which can be stationary or mobile.

The present invention will hereinafter be described with reference to a human-machine interface device 100. However, it should be understood that the techniques described in present description are applicable to any display device in general and are not limited to human-machine interface devices in any manner.

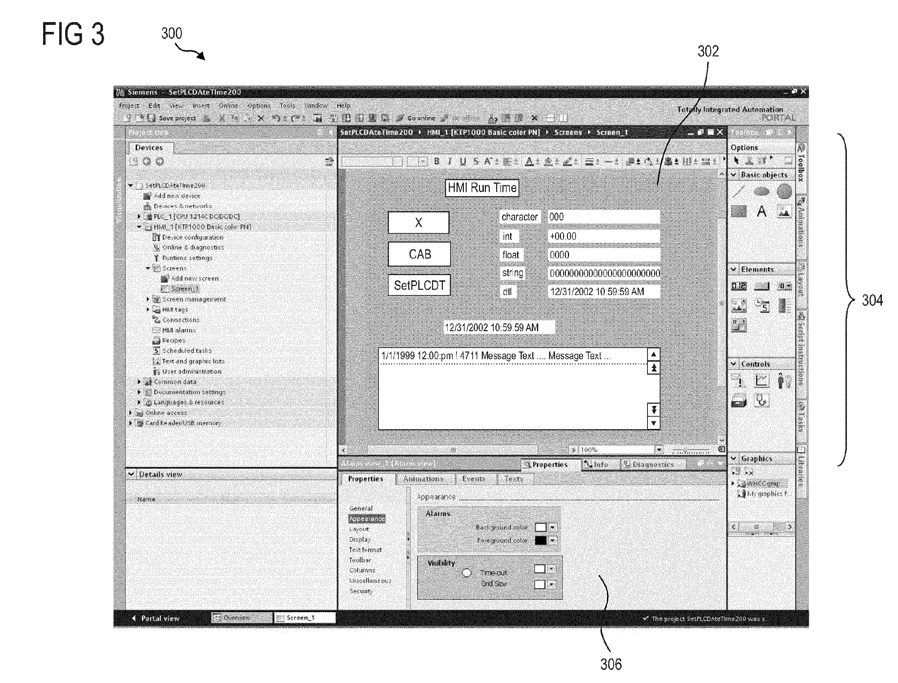

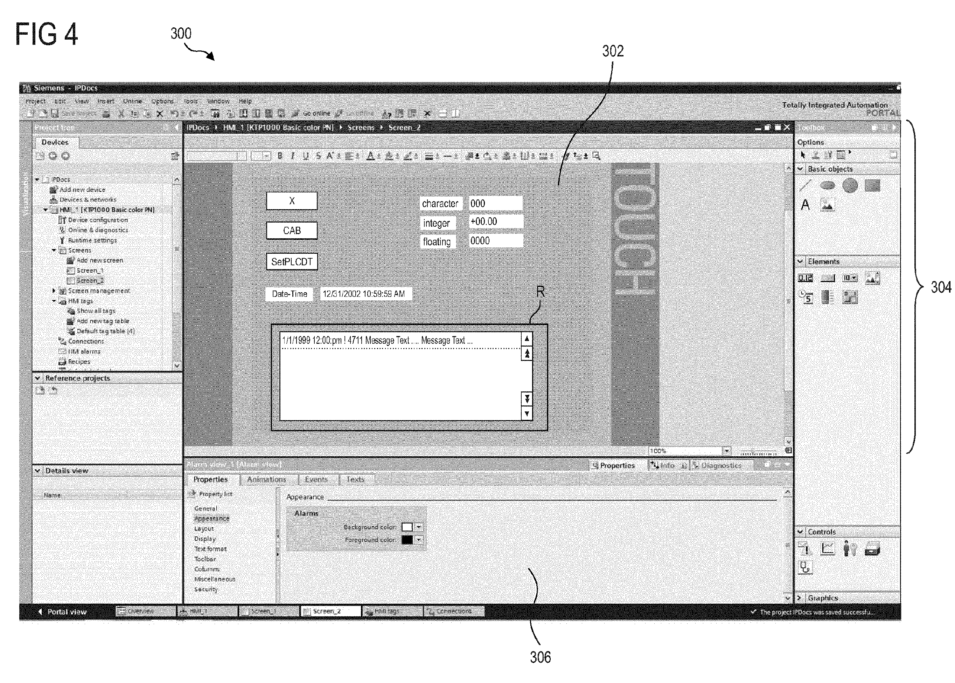

Referring now to FIGS 3 and 4, a first and a second schematic view of a graphical development environment 300 are illustrated respectively in accordance with an embodiment of the present invention.

The graphical development environment 300 includes a main design section 302, a pallet section 304, and a property view section 306.

A user, for example, an automation engineer, is able to build graphical user-interfaces using the graphical development environment 300. The graphical user-interfaces are subsequently integrated into configuration files and compiled to generate a runtime application. The runtime application is downloaded onto a human-machine interface device 100 and executed in the processing unit 104 therein.

The main design section 302 permits design and editing of a graphical user interface.

The pallet section 304 includes multitude of graphical objects, which can be individually selected for designing individual graphical user-interfaces. A user may, for example, drag-and-drop an individual graphical object from the pallet section 304 to the main design section 302. Thus, the pallet section 304 permits selection of predefined graphical objects for inserting into a graphical user interface.

The property view section 306 permits setting of one or more properties corresponding to the graphical objects.

In various exemplary embodiments of the present invention, each graphical object is associated with a pixel-intensity property, a grid layout property, and a time-out property. Each of these properties can be assigned a corresponding parameter value using the property view section 306.

The parameter value of pixel-intensity property can be set to distinct values. In one example, the graphical development environment 300 is configured to set the parameter value to three distinct values namely, 'full power-saving mode', 'partial power-saving mode', and 'null power-saving mode'. It should be noted that the parameter values assigned to pixel-intensity property are only exemplary. In different embodiments of the present invention, a quantitative scale may be used to indicate a desired parameter value for pixel-intensity property. As will become more readily understood for description provided later on in the present disclosure, the pixel-intensity property indicates whether a power-saving rendering mode should be activated for an individual graphical object; and if so, an illumination intensity of light-emitting elements corresponding thereto while the power-saving rendering mode is active.

Similarly, the parameter value of grid layout property is set to indicate coordinates of a minimum bounding rectangle enclosing the relevant graphical object. In one example, as shown in FIG 4, a grid view is activated and a user is able to indicate the minimum bounding rectangle (R) during design time. The resolution of the grid shown in the grid view is dependent of screen resolution of a target display device 100.

In alternative embodiments of the present invention, the graphical development environment may specify the locus of points defining an outline of the graphical object as parameter value of the grid layout property.

The time-out property is set to indicate the time duration of user inactivity subsequent to which the power-saving rendering mode should be activated for the individual graphical object.

With reference to the example particularly illustrated in the adjoining figures, the automation engineer is particularly interested in enabling the graphical object corresponding to the alarm view for power-saving rendering mode. The automation engineer, therefore, selects that graphical object and sets various relevant properties such as the pixel-intensity property to "null power-saving mode" such that the graphical object corresponding to the alarm view remains enabled.

These technical features pertaining to parameter values of individual properties associated with graphical objects will be more fully understood in conjunction with FIG 1 a little later in the present description.

Various properties of graphical objects as mentioned in the preceding description facilitate rendering an individual graphical object in one of a normal rendering mode and a power-saving rendering mode during runtime on the human-machine interface device 100, as will now be described.

Referring back to FIG 1, the display device 100 (or human-machine interface device 100) renders the individual graphical objects in one of two possible rendering modes, namely, a normal rendering mode and a power-saving rendering mode.

The processing unit 104 is configured for individually assigning a rendering mode to at least one of the graphical objects. The graphical object is rendered on the display unit 102 in accordance with the rendering mode assigned thereto. As mentioned earlier, the rendering mode is one of a normal rendering mode and a power-saving rendering mode. When a graphical object is rendered in the power-saving rendering mode, the processing unit 104 regulates an illumination intensity of at least one light-emitting element corresponding to the graphical object.

It should be understood that the processing unit 104 switches the rendering mode assigned to an individual graphical objects within a graphical user-interface between the normal rendering mode and the power-saving rendering mode based on predefined criterion as will be understood from the following description. In one example, the default rendering mode for each graphical object is normal rendering mode. The individual graphical objects may switch to the power-saving rendering mode based on the predefined criterion.

As explained in conjunction with FIGS 3 and 4, each graphical object is associated with a pixel-intensity property. When a graphical object is rendered in the power-saving rendering mode, the illumination intensity of corresponding light-emitting elements is regulated based on a parameter value assigned to the pixel-intensity property thereof.

In one exemplary embodiment of the present invention, the parameter value of the pixel-intensity property is set to one of three distinct values. These values are named as 'full power-saving mode', 'partial power-saving mode', and 'null power-saving mode'.

When the graphical object is rendered in a power-saving rendering mode, and the pixel-intensity property thereof is assigned a parameter value of 'full power-saving mode', the illumination intensity of each light-emitting element corresponding to the graphical object is set to a minimum level.

When the graphical object is rendered in a power-saving rendering mode, and the pixel-intensity property thereof is assigned a parameter value of 'null power-saving mode', the illumination intensity of each light-emitting element corresponding to the graphical object is set to a maximum level.

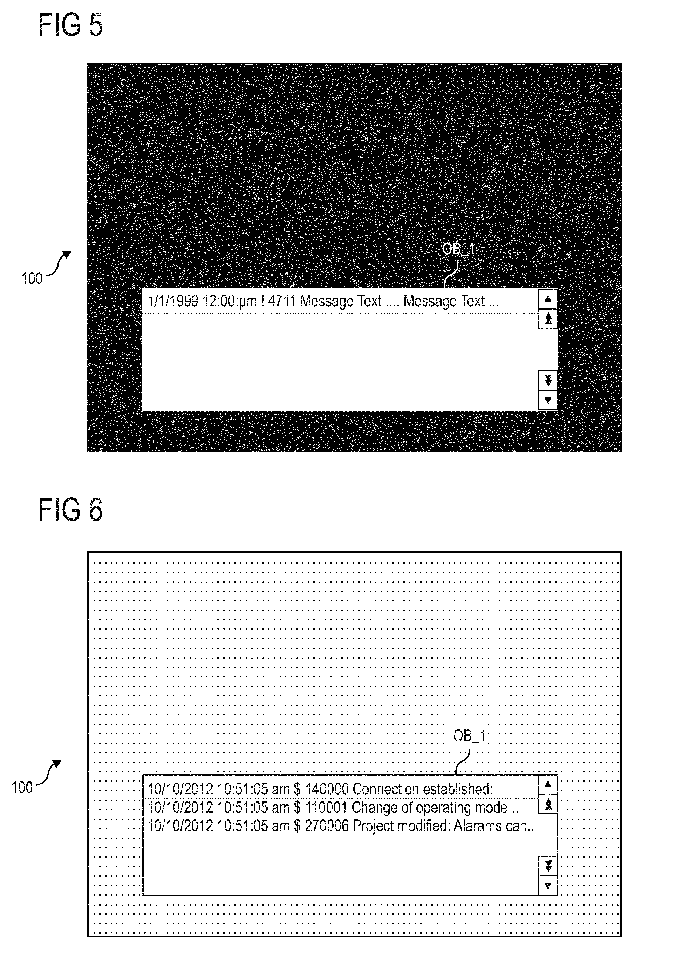

Referring to FIG 5, the pixel-intensity property for graphical object (OB_1) is set to "null power-saving mode" while for all other graphical objects in the graphical user-interface, the pixel-intensity property is set of "full power-saving mode".

When the graphical object is rendering in power-saving rendering mode, and the parameter value of the pixel-intensity property is set to 'partial power-saving mode', at least two alternative embodiments are currently envisaged.

In a first embodiment of the present invention, the illumination intensity corresponding to each light-emitting element corresponding to the graphical object is set to an intermediate level between a minimum level and a maximum level thereof. The intermediate level can be predefined in the graphical development environment 300 or the human-machine interface device 100. The resultant graphical user-interface is illustrated in FIG 6.

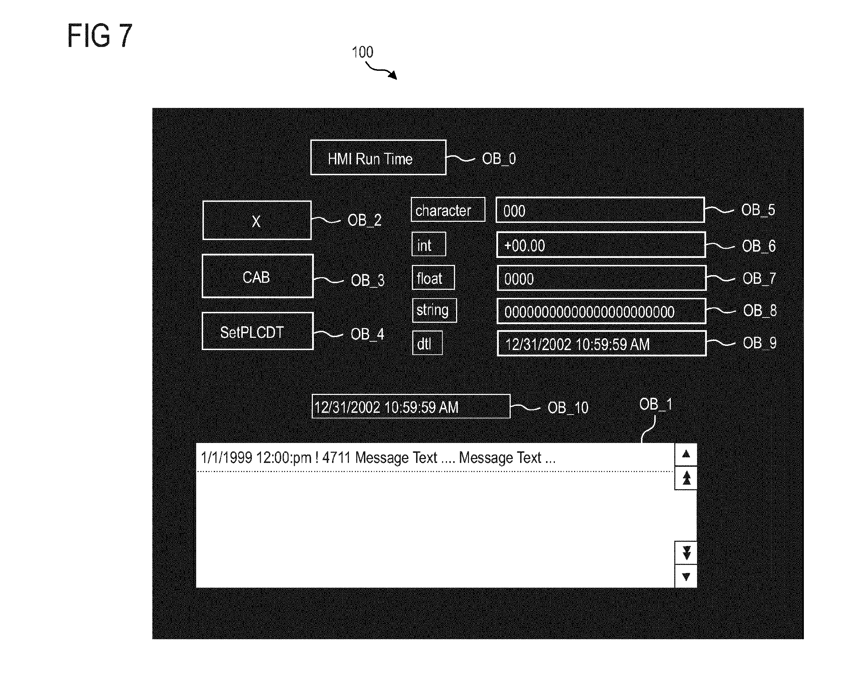

In a second embodiment of the present invention, the illumination intensity of a subset of light-emitting elements corresponding to the graphical object is set at a maximum level thereof while the illumination intensity of remaining light-emitting elements corresponding to the graphical object is set at a minimum level thereof. In this embodiment, when a graphical object is rendered in power-saving rendering mode, at least an outline of the graphical object and/or a display text corresponding thereto is rendered on the display unit 102. In this embodiment, the display pixels corresponding to the desired display regions are specified as the grid layout property during design and configuration in the graphical development environment 300. The processing unit 104 uses this information to identify the corresponding set of the light-emitting elements and set the illumination level thereof to the maximum level. The illumination level for the remaining light-emitting elements is set to the minimum level. The resultant graphical user-interface is illustrated in FIG 7.

As will be appreciated, rendering individual graphical objects in this manner ensures that a user of the display device 100 does not experience a drastic change in the look- and-feel of the display screen on the display device 100.

It should be noted that the terms the 'maximum level' and the 'minimum level' indicate the maximum and the minimum illumination intensity levels respectively within the system-level constraints defined in the display device 100; that is the maximum level does not necessarily correspond to the absolute maximum level possible but only the maximum level set as a system property in the display device 100. In addition, the minimum level, in one example, is simply zero, which in effect implies that the relevant light-emitting elements are simply switched off. Further, it should be noted that the intermediate level may be specified in terms of percentage value of the maximum level. It should further be noted that while distinct exemplary implementations of power-saving rendering mode are explained in the context of regulation of the illumination level, it is possible to combine these different implementations in several different manners. For example, one or more graphical objects may be configured such that during runtime, the graphical object first moves to a partial power-saving rendering mode and subsequently, to a full power-saving rendering mode. Several different permutations and combinations will be apparent to a person ordinarily skilled in the art.

It should be noted that the illumination level of individual light emitting diodes arranged in display devices may be regulated using any standard technique available in the state-of-the-art. The aspect related to technique for regulating illumination level of individual light emitting diode is not per se within the scope of the present invention, and hence, not being described in detail herein.

As mentioned in conjunction with FIGS 3 and 4, each graphical object is associated with a grid layout property. In one exemplary embodiment of the present invention, the parameter value assigned to the grid layout property is set to screen-coordinates of a minimum bounding rectangle (R) corresponding to the graphical object, as illustrated particularly in FIG 4. In this embodiment of the present invention, the processing unit 104 determines a set of light-emitting elements corresponding to the graphical object based on the grid layout property thereof.

In an exemplary embodiment of the present invention, each graphical object is associated with a time-out property. The parameter value assigned to the time-out property is set to a finite time units. The user may set the parameter value in this case to any desired value such as 2 minutes, 10 minutes, and so on.

The processing unit 104 monitors user interaction with the display unit 102. When the processing unit 104 records continual absence of the user interaction for the finite time units as defined in the time-out property, the graphical object is assigned the power-saving rendering mode.

It should be noted that individual graphical objects on a graphical user-interface may be assigned distinct parameter values for the time-out property thereof. In this example, when there is no user interaction with the human-machine interface device 100 for a continued time period, individual graphical objects may successively be shifted from the normal rendering mode to the power-saving rendering mode.

In another embodiment of the present invention, the graphical object is assigned the power-saving rendering mode based on a user input therefor. In one example, the display device 100 is provided with a dedicated hard-key and/or a soft-key to trigger the power-saving rendering mode. In this example, various graphical objects that are configured to be rendered in power-saving rendering mode are rendered accordingly, independent of the parameter values of corresponding time-out properties. In other words, in this example, the time-out property is overridden based on an explicit user input.

In various embodiments of the present invention, the display device 100 is configured to restore all graphical objects to normal rendering mode based on a user input therefor. In a preferred embodiment of the present invention, the display device 100 is configured such that any user interaction with the display device 100 triggers the normal rendering mode as per this embodiment.

The present invention provides several advantages. First and foremost, the energy consumption in display devices is effectively reduced through rendering only selected graphical objects therein. The technical features of the present invention, in effect, help to increase the life span of the display screen used in a display device. In addition, the present invention advantageously leads to reduced radiation from the display device and accordingly, leads to less strain on user's eyes. Furthermore, the higher temperature ratings of the LED backlight will help the panels to operate at higher temperature in comparison with the other backlights.

The present invention can take the form of a computer program product comprising program modules accessible from computer-usable or computer-readable medium storing program code for use by or in connection with one or more computers, processors, or instruction execution system. For the purposes of this description, a computer-usable or computer readable medium can be any apparatus that can contain, store, communicate, propagate, or transport the program for use by or in connection with the instruction execution system, apparatus, or device. The medium can be an electronic, magnetic, optical, electromagnetic, infrared, or semiconductor system (or apparatus or device) or a propagation medium (though propagation mediums in and of themselves as signal carriers are not included in the definition of physical computer-readable medium). Examples of a physical computer-readable medium include a semiconductor or solid state memory, magnetic tape, a removable computer diskette, a random access memory (RAM), a read-only memory (ROM), a rigid magnetic disk and an optical disk, Current examples of optical disks include compact disk--read only memory (CD-ROM), compact disk--read/write (CD-R/W) and DVD. Both processors and program code for implementing each aspect of the technology can be centralized or distributed (or a combination thereof) as known to those skilled in the art.

While the present invention has been described in detail with reference to certain embodiments, it should be appreciated that the present invention is not limited to those embodiments. In view of the present disclosure, many modifications and variations would present themselves, to those of skill in the art without departing from the scope of various embodiments of the present invention, as described herein. The scope of the present invention is, therefore, indicated by the following claims rather than by the foregoing description. All changes, modifications, and variations coming within the meaning and range of equivalency of the claims are to be considered within their scope.

## Claims

1. A display device (100), said display device (100) comprising:
- a display unit (102), said display unit (102) comprising a matrix of light-emitting elements, wherein each light-emitting element illuminates at least one display pixel on said display unit (102),
- a processing unit (104), said processing unit (104) configured for executing a runtime application, said runtime application comprising at least one graphical user interface, said graphical user interface comprising a plurality of graphical objects (OB_1... OB_N), and
said display device (100) being **characterized in that** said display device (100) is configured for individually assigning a rendering mode to at least one of said graphical objects (OB_1... OB_N), wherein said rendering mode is one of a normal rendering mode and a power-saving rendering mode, and wherein said display device (100) is further configured for regulating an illumination intensity of at least one light-emitting element corresponding to said graphical object when said power-saving rendering mode is assigned thereto.

2. The display device (100) according to claim 1, wherein each graphical object is associated with a pixel-intensity property, wherein said illumination intensity is regulated based on a parameter value assigned to said pixel-intensity property thereof when said graphical object is rendered in said power-saving rendering mode.

3. The display device (100) according to claim 2, wherein said parameter value of said pixel-intensity property is set to 'full power-saving mode', wherein said illumination intensity of each light-emitting element corresponding to said graphical object is set to a minimum level when said graphical object is rendered in a power-saving rendering mode.

4. The display device (100) according to any of claims 2 or 3, wherein said parameter value of said pixel-intensity property is set to 'partial power-saving mode', wherein said illumination intensity corresponding to each light-emitting element corresponding to said graphical object is set to an intermediate level between a minimum level and a maximum level thereof when said graphical object is rendered in a power-saving rendering mode.

5. The display device (100) according to any of claims 2 to 4, wherein said parameter value of said pixel-intensity property is set to 'partial power-saving mode', wherein said illumination intensity of a first subset of light-emitting elements corresponding to said graphical object is set at a maximum level thereof and further wherein said illumination intensity of a second subset of light-emitting elements corresponding to said graphical object is set at a minimum level thereof when said graphical object is rendered in a power-saving rendering mode such that at least an outline of said graphical object and/or a display text corresponding thereto are rendered on said display unit (102).

6. The display device (100) according to any of claims 2 to 5, wherein said parameter value of said pixel-intensity property is set to 'null power-saving mode', wherein said illumination intensity of each light-emitting element corresponding to said graphical object is set to a maximum level thereof when said graphical object is rendered in a power-saving rendering mode.

7. The display device (100) according to any of the preceding claims, wherein each graphical object is associated with a grid layout property, wherein a parameter value assigned to said grid layout property is set to screen-coordinates of a minimum bounding rectangle corresponding to said graphical object, wherein said processing unit (104) determines a set of light-emitting elements corresponding to said graphical object based on said grid layout property thereof.

8. The display device (100) according to any of the preceding claims, wherein each graphical object is associated with a time-out property, wherein a parameter value assigned to said time-out property is set to a finite time units; and wherein said processing unit (104) monitors user interaction with said display unit (102), and wherein said graphical object is assigned said power-saving rendering mode based on continual absence of said user interaction for said finite time units.

9. The display device (100) according to any of the preceding claims, wherein one of said graphical object is assigned said power-saving rendering mode based on a user input therefor.

10. The display device (100) according to any of the preceding claims, wherein said graphical object is assigned said normal rendering mode based on a user input therefor.

11. A graphical development environment (300), said graphical development environment (300) comprising a main design section (302) permitting design of a graphical user interface, a pallet section (304) permitting selection of predefined graphical objects (OB_1... OB_N) for inserting into said graphical user interface, and a property view section (306) permitting setting of one or more properties corresponding to said graphical objects (OB_1... OB_N), said graphical development environment (300) **characterized in that** at least one graphical object is individually configured to be rendered in one of a normal rendering mode and a power-saving rendering mode, and further such that said graphical user interface is suitable for rendering in a display device (100) according to any of claims 1 to 10.

12. The graphical development environment (300) according to claim 11, wherein each graphical object is associated with a pixel-intensity property, said pixel-intensity property being assigned a parameter value using said property view section (306).

13. The graphical development environment (300) according to any of the preceding claims, wherein each graphical object is further associated with a grid layout property, said grid layout property being assigned a parameter value using said property view section (306).

14. The graphical development environment (300) according to any of the preceding claims, wherein each graphical object is further associated with a time-out property, said time-out property being assigned a parameter value using said property view section (306).

## Amended claims

### Amended claims in accordance with Rule 137(2) EPC.

1. A display device (100), said display device (100) comprising:
- a display unit (102), said display unit (102) comprising a matrix of light-emitting elements, wherein each light-emitting element illuminates at least one display pixel on said display unit (102),
- a processing unit (104), said processing unit (104) configured for executing a runtime application, said runtime application comprising at least one graphical user interface, said graphical user interface comprising a plurality of graphical objects (OB_1... OB_N), and
said display device (100) being **characterized in that** said display device (100) is configured for individually assigning a rendering mode to at least one of said graphical objects (OB_1... OB_N), wherein said rendering mode is one of a normal rendering mode and a power-saving rendering mode, and wherein said display device (100) is further configured for regulating an illumination intensity of at least one light-emitting element corresponding to said graphical object when said power-saving rendering mode is assigned thereto; **characterised in that**,
each graphical object is associated with a grid layout property, wherein a parameter value assigned to said grid layout property is set to screen-coordinates of a minimum bounding rectangle corresponding to said graphical object, wherein said processing unit (104) determines a set of light-emitting elements corresponding to said graphical object based on said grid layout property thereof.

2. The display device (100) according to claim 1, wherein each graphical object is associated with a pixel-intensity property, wherein said illumination intensity is regulated based on a parameter value assigned to said pixel-intensity property thereof when said graphical object is rendered in said power-saving rendering mode.

3. The display device (100) according to claim 2, wherein said parameter value of said pixel-intensity property is set to `full power-saving mode', wherein said illumination intensity of each light-emitting element corresponding to said graphical object is set to a minimum level when said graphical object is rendered in a power-saving rendering mode.

4. The display device (100) according to any of claims 2 or 3, wherein said parameter value of said pixel-intensity property is set to 'partial power-saving mode', wherein said illumination intensity corresponding to each light-emitting element corresponding to said graphical object is set to an intermediate level between a minimum level and a maximum level thereof when said graphical object is rendered in a power-saving rendering mode.

5. The display device (100) according to any of claims 2 to 4, wherein said parameter value of said pixel-intensity property is set to 'partial power-saving mode', wherein said illumination intensity of a first subset of light-emitting elements corresponding to said graphical object is set at a maximum level thereof and further wherein said illumination intensity of a second subset of light-emitting elements corresponding to said graphical object is set at a minimum level thereof when said graphical object is rendered in a power-saving rendering mode such that at least an outline of said graphical object and/or a display text corresponding thereto are rendered on said display unit (102).

6. The display device (100) according to any of claims 2 to 5, wherein said parameter value of said pixel-intensity property is set to 'null power-saving mode', wherein said illumination intensity of each light-emitting element corresponding to said graphical object is set to a maximum level thereof when said graphical object is rendered in a power-saving rendering mode.

7. The display device (100) according to any of the preceding claims, wherein each graphical object is associated with a time-out property, wherein a parameter value assigned to said time-out property is set to a finite time units; and wherein said processing unit (104) monitors user interaction with said display unit (102), and wherein said graphical object is assigned said power-saving rendering mode based on continual absence of said user interaction for said finite time units.

8. The display device (100) according to any of the preceding claims, wherein one of said graphical object is assigned said power-saving rendering mode based on a user input therefor.

9. The display device (100) according to any of the preceding claims, wherein said graphical object is assigned said normal rendering mode based on a user input therefor.
